# EUROPÄISCHE PATENTSCHRIFT

(11) **EP 1 587 722 B1**
(45) Veröffentlichungstag und Bekanntmachung des Hinweises auf die Patenterteilung: **01.08.2007**
(21) Anmeldenummer: 03789320.3
(22) Anmeldetag: 18.12.2003
(51) Int. Cl.: B60T 8/00

(54) **VERFAHREN ZUR ERHÖHUNG DER FAHRSTABILITÄT**
METHOD FOR IMPROVING DRIVING STABILITY
PROCEDE D'AUGMENTATION DE LA STABILITE DE CONDUITE

(30) Priorität: 21.01.2003 DE 10302080
(43) Veröffentlichungstag der Anmeldung: 26.10.2005
(73) Patentinhaber: Continental Teves AG & Co. oHG, 60488 Frankfurt am Main (DE)
(72) Erfinder: KARNER, Jürgen, 60486 Frankfurt/Main (DE); ZELLER, Andreas, 60489 Frankfurt/Main (DE); BETHKE, Dietmar, 61169 Friedberg (DE)
(86) Internationale Anmeldenummer: PCT/EP2003/014449
(87) Internationale Veröffentlichungsnummer: WO 2004/065190

(56) Entgegenhaltungen:
- DE-A- 3 505 268
- DE-C- 19 602 339
- US-A- 5 119 303

## Beschreibung

Die Erfindung betrifft ein Verfahren zur Erhöhung der Fahrstabilität in Kraftfahrzeugen während geregelter Bremsvorgänge gemäß Oberbegriff von Anspruch 1 sowie ein elektronisches Kraftfahrzeugbremssystem gemäß Anspruch 5.

Beschrieben ist insbesondere eine verbesserte Druckregelung zur Blockierverhinderung an der Hinterachse in elektronischen Kraftfahrzeugbremssystemen für Fahrzeuge mit gekoppelten Hinterrädern, welche zusätzlich zu ABS eine an sich bekannte Giermomentenregelung (GMB) umfassen. Eine Giermomentenregelung wird aktiv, wenn sich ein Fahrzeug auf Fahrbahnen mit sogenannten µ-Split Bedingungen bewegt, wobei bei µ-Split Bedingungen unterschiedliche Reibwerte an den Rädern wirken, die zu einem auf das Fahrzeug wirkenden Giermoment führen.

In einem üblichen Kraftfahrzeug-Antiblockiersystem wird bei der durchgeführten Regelung des Radschlupfs neben dem Ziel, einen optimalen Bremsweg zu erzielen, unter Verzicht auf einen optimalen Bremsweg auch dem Ziel eines möglichst stabilen Fahrverhaltens Rechnung getragen. Daher wird bei Personenkraftfahrzeugen in der Regel die Hinterachse nach dem Prinzip des "Select-Low" geregelt. Das "Select-Low"-Prinzip ist dadurch charakterisiert, dass der Bremsdruck an beiden Hinterrädern durch das Hinterrad bestimmt ist, das die größere Neigung zum Blockieren aufweist. Dadurch wird die größtmögliche Fahrzeugstabilität sichergestellt.

Die Erfindung setzt sich zum Ziel, ein z.B. aus DE 3505268 bekanntes ABS-Regelverfahren für Fahrzeuge mit gekoppelten Hinterrädern (z.B. starre Kopplung) zu verbessern.

Diese Aufgabe wird erfindungsgemäß gelöst durch ein Verfahren gemäß Patentanspruch 1.

Es hat sich nun gezeigt, dass das "Select-Low"-Prinzip bei Fahrzeugen, deren Hinterräder beispielsweise durch eine Quersperre starr miteinander gekoppelt sind, vor allem auf Fahrbahnen mit unterschiedlichem Reibwert zu einem instabilen Fahrverhalten führt.

Der Erfindung liegt unter anderem die Erkenntnis zu Grunde, dass die starre Kopplung der Hinterräder in Verbindung mit dem "Select-Low"-Prinzip dazu führt, dass sich die Summe der durch die Hinterräder übertragbaren, jeweils maximalen Längskraft zu gleichen Teilen auf die beiden Hinterräder aufteilt.

Unter einer starren Kopplung wird eine permanent vorliegende oder eine lösbare starre Kopplung der Räder der Hinterachse verstanden, wobei der Begriff "starr" auch zumindest in gewissem Maße auch elastische oder nachgiebige Kopplungen mit einschließt.

Gemäß der Erfindung wird ein spezielles Druckmodulationsverfahren für die Hinterachse vorgeschlagen, wobei diese spezielle Druckmodulation an der Hinterachse durchgeführt wird, in dem die Druckmodulation des sich auf Niedrigreibwert befindenden Vorderrads für beide Räder der Hinterachse im wesentlichen unverändert übernommen wird.

Bedingt durch die starre Kopplung der Hinterräder lässt sich aus dem nahezu identischen Radverhalten beider Hinterräder nicht auf den Bremsdruck an der Haftgrenze *eines* Hinterrades schließen, sondern nur auf die *Summe* der Bremsdrücke an der Haftgrenze beider Hinterräder. Da die Vorderräder nicht gekoppelt sind, lässt sich aus deren Radverhalten auf den Bremsdruck an der Haftgrenze eines Rades schließen. Aus diesem Grund wird die Druckmodulation des Niedrigreibwert-Vorderrads für die Hinterachse übernommen.

Besonders zweckmäßig lässt sich das hier vorgeschlagene spezielle Druckmodulationsverfahren in Kombination mit einem an sich bekannten GMB-Verfahren ergänzen, wobei durch ein GMB-Verfahren während einer ABS-Regelung speziell bei der Erkennung von "µ-split"-Fahrbahnen das Giermoment durch eine Bremsdruckmodulation an der Vorderachse verringert wird.

Durch das Verfahren nach der Erfindung wird demzufolge die Fahrzeugstabilität auf "µ-split"-Fahrbahnen bei Fahrzeugen mit starr gekoppelten Hinterrädern gegenüber an sich bekannten Verfahren erhöht.

Bevorzugt können weitere Erkennungsmechanismen zur Vermeidung von Schlupf an der Hinterachse parallel aktiviert sein, welche die Wirkung haben, dass Druck an beiden Hinterrädern dann abgebaut wird, wenn an mindestens einem Hinterrad ein bevorstehendes instabiles Radverhalten festgestellt wird.

Die erfindungsgemäße spezielle Druckmodulation an der Hinterachse wird bevorzugt von einem Erkennungssignal abhängig gemacht, welches signalisiert, ob eine Kopplung der Hinterräder vorliegt. Weiterhin ist es zweckmäßig, die Funktion davon abhängig zu machen, ob die GMB-Funktion an der Vorderachse aktiv ist. Es ist besonders zweckmäßig, wenn als Kriterium zur Erkennung einer "µ-Split"-Fahrbahn überwacht wird, ob eine im Steuergerät vorhandene GMB-Funktion gerade aktiv ist.

Die für die Hinterachse von dem sich auf Niedrigreibwert befindenden Vorderrad übernommenen Druckaufbauzeiten und Druckabbauzeiten werden zwar im wesentlichen unverändert übernommen, können aber im Sinne der Erfindung durchaus etwas anders gewichtet werden, wobei sich Abweichungen im wesentlichen darauf beschränken, etwaig vorhandene hydraulische Unterschiede (z.B. Volumenaufnahme, Leitungsquerschnitt, Schaltblende) im Bremskreis der Vorder- und Hinterachse auszugleichen. Bevorzugt wird das auf Niedrigreibwert befindende Vorderrad detektiert, in dem geprüft wird, ob eine aktive GMB-Funktion an diesem Rad in der aktuellen Situation nicht eingreift.

Weitere bevorzugte Ausführungsformen ergeben sich aus den Unteransprüchen und der nachfolgenden Beschreibung der Figuren.

Nachfolgend wird die Erfindung an Hand von Beispielen näher erläutert.

Es zeigen
- Fig. 1: eine Darstellung von Fahrparametern während einer ABS-geregelten Bremsung mit einer "Select-Low"-Regelung an der Hinterachse µ-split-Fahrbahn und
- Fig. 2: eine entsprechende Darstellung dieser Fahrparameter nach Anwendung des erfindungsgemäßen Verfahrens.

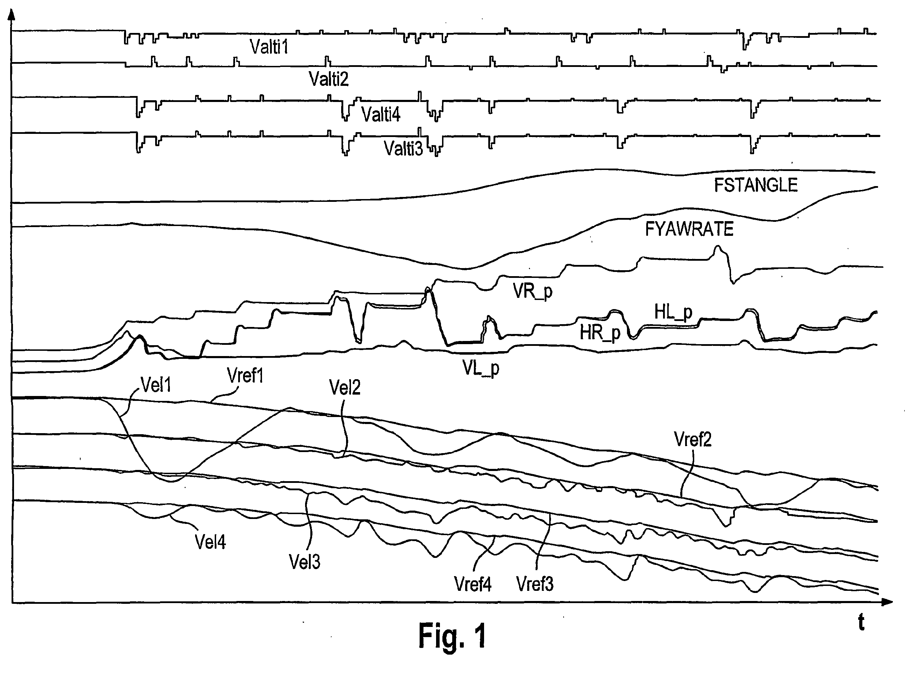

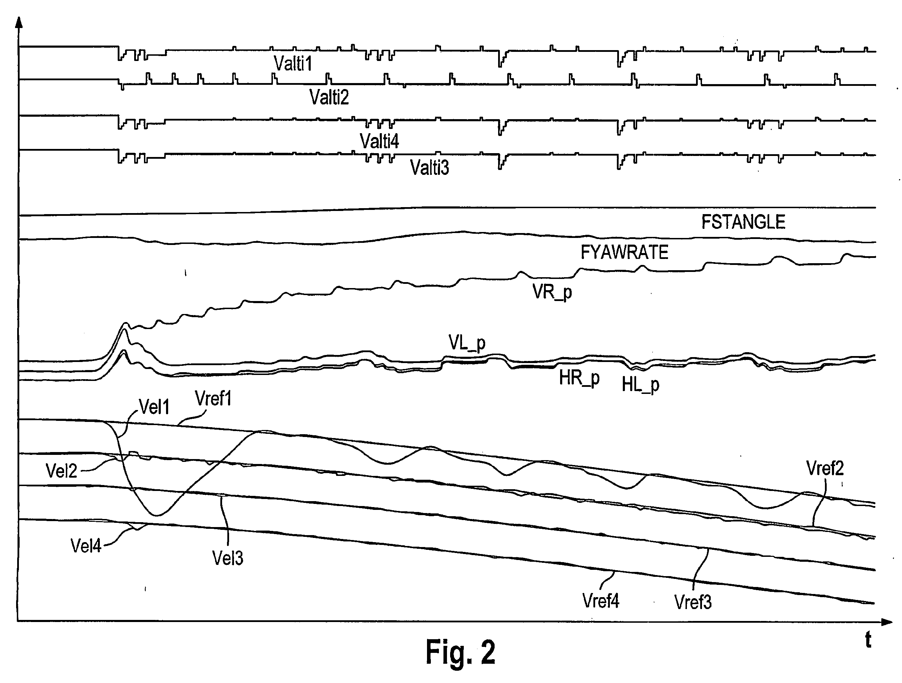

In den Figuren 1 und 2 sind die Fahrzeugreferenzgeschwindigkeiten V_{ref1} bis V_{ref4} (abgeleitet von V_{ref}) gemeinsam mit den Radgeschwindigkeiten vₑ₁₁ bis vₑ₁₄ der einzelnen Fahrzeugräder für die Räder 1 bis 4 über der Zeit t aufgetragen. Durchgängig sind dabei die Räder, "vorne links", "vorne rechts", "hinten links" und "hinten rechts" entsprechend dieser Reihenfolge mit den Ziffern 1 bis 4 bezeichnet. Weiterhin ist jeweils die Gierrate FYAWRATE und der aktuelle Lenkwinkel FSTANGLE des Fahrzeugs über der Zeit t aufgetragen. Die Kurven Vₐₗₜᵢ₁ bis Vₐₗₜᵢ₄ geben den zeitlichen Verlauf des durch das Steuergerät eingestellten Zustand der Ein- und Auslassventil für die Räder 1 bis 4 an. Die Kurven VR_p, VL_p, HR_p und HL_p geben den aktuell herrschenden Druck in den entsprechenden Radzylindern wieder.

Aus Fig. 1 ist ersichtlich, dass während einer ABS-Bremsung auf µ-Split die Radgeschwindigkeit vₑ₁₁ von Rad 1 (vorne links) unter die Fahrzeugreferenzgeschwindigkeit absinkt. Im weiteren zeitlichen Verlauf, während einer aktivierten ABS-Regelung, sinken die Radgeschwindigkeiten der beiden Hinterräder vₑ₁₃ und vₑ₁₄ auf einen Wert unterhalb der Referenzgeschwindigkeit V_{ref} ab. Als Folge davon nur noch wenig Seitenkraft von den Hinterrädern auf die Fahrbahn übertragen werden. Das Fahrzeug wird instabil. Zusätzlich wird an der Vorderachse durch die GMB-Funktion des ABS-Steuergeräts ein auf das Fahrzeug wirkendes Giermoment aufgebaut, was zu einem Ausbrechen des Fahrzeugs führt, wie aus dem Verlauf der Kurven der Gierrate FYAWRATE und dem durch den Fahrer beeinflussten Lenkwinkel FSTANGLE erkennbar ist.

Fig. 2 zeigt eine ABS-geregelte Bremsung, die durch das Verfahren der vorliegenden Erfindung ergänzt ist. Die Kurve Vₐₗₜᵢ₁ zeigt die Ansteuersignale des Vorderrades "vorne links", welches einen niedrigeren Reibwert hat, als das Vorderrad "vorne rechts". Der Druckabbau an Vorderrad "vorne rechts" ist daher geringer, wie aus Kurve Vₐₗₜᵢ₂ ersichtlich ist. Daher ist auch der Druck in der Radbremse des rechten Vorderrades VR_p höher, als in der Radbremse des linken Vorderrades VL_p. Im Beispiel werden die Ventilansteuersignale Vₐₗₜᵢ₁ für das linke Vorderrad "vorne links" auch beiden Rädern der Hinterachse Vₐₗₜᵢ₃ und Vₐₗₜᵢ₄ zugeführt. Wie die Kurven der Gierrate, des Lenkwinkels und der Radgeschwindigkeiten zeigen, bleibt das Fahrzeug in diesem Fall stabil. Im Vergleich zu der an sich bekannten ABS-geregelten Bremsung nach dem "Select-Low"-Prinzip in Fig. 1 ist die Amplitude der Fahrzeuggierrate (FYAWRATE) geringer, so dass der Fahrer weniger stark gefordert ist, über eine Änderung des Lenkwinkels (FSTANGLE) die Fahrzeuggierrate zu korrigieren.

## Patentansprüche

1. Verfahren zur Erhöhung der Fahrstabilität während elektronisch geregelter Bremsvorgänge in Kraftfahrzeugen mit starr bzw. im wesentlichen starr gekoppelten oder koppelbaren Hinterrädern, **dadurch gekennzeichnet, dass** bei Feststellung einer "µ-Split"-Fahrsituation durch das zur Durchführung der Regelaufgaben verwendete Bremsensteuergerät die Druckmodulation des sich auf Niedrigreibwert und in der elektronischen Regelung befindenden Vorderrades für beide Räder der Hinterachse im wesentlichen unverändert übernommen wird.

2. Verfahren nach Anspruch 1, **dadurch gekennzeichnet, dass** lediglich eine Anpassung der übernommenen Druckmodulation in Abhängigkeit von spezifischen physikalischen Eigenschaften der Bremsanlage, wie zum Beispiel hydraulische Unterschiede der Vorderradbremsen und Hinterradbremsen, durchgeführt wird.

3. Verfahren nach Anspruch 2, **dadurch gekennzeichnet, dass** eine Anpassung **dadurch** erfolgt, dass Druckaufbauzeiten und Druckabbauzeiten an der Hinterachse unterschiedlich gewichtet werden.

4. Verfahren nach mindestens einem der vorherigen Ansprüche, **dadurch gekennzeichnet, dass** parallel zu der Übernahme der Druckmodulation weitere ABS-Regelfunktionen, die auf die Hinterachse wirken, parallel aktiv sind, so dass z.B. an beiden Hinterrädern Druck abgebaut wird, wenn an mindestens einem Hinterrad ein instabiles Radverhalten droht.

5. Elektronisches Kraftfahrzeugbremssystem, **dadurch gekennzeichnet, dass** ein Verfahren gemäß den vorhergehenden Ansprüchen in einem Mikrorechner eines elektronischen Bremsensteuergerätes durchgeführt wird.

## Claims

1. A method of increasing the driving stability during electronically controlled braking operations in motor vehicles with rear wheels that are or can be rigidly or substantially rigidly coupled,
**characterized in that** when a 'µ-split' driving situation is detected by the brake control unit used to perform the control tasks, the pressure modulation of the front wheel being at a low coefficient of friction and undergoing electronic control is adopted for both wheels of the rear axle without substantial changes.

2. The method as claimed in claim 1,
**characterized in that** the adopted pressure modulation is only adapted depending on specific physical properties of the brake system, such as hydraulic differences of the front-wheel brakes and rear-wheel brakes.

3. The method as claimed in claim 2,
**characterized in that** an adaptation is effected by differently weighting pressure increase times and pressure reduction times on the rear axle.

4. The method as claimed in at least one of the previous claims,
**characterized in that** in parallel to the adoption of the pressure modulation, further ABS control functions which act on the rear axle are parallel active so that e.g. pressure is reduced on both rear wheels when an unstable wheel behavior is imminent on at least one rear wheel.

5. Electronic motor vehicle brake system,
**characterized in that** a method as claimed in the previous claims is performed in a microprocessor of an electronic brake control unit.

## Revendications

1. Procédé pour accroître la stabilité de conduite pendant les freinages à régulation électronique de véhicules automobiles avec roues arrière couplées ou pouvant être couplées rigidement ou sensiblement rigidement, **caractérisé en ce que** lorsqu'est constatée une situation de conduite "µ-split" par l'appareil de commande des freins utilisé pour l'exécution des tâches de régulation, la modulation de la pression de la roue avant à faible coefficient de friction et se trouvant en régulation électronique est reprise sensiblement sans changement pour les deux roues de l'essieu arrière.

2. Procédé selon la revendication 1, **caractérisé en ce qu'**il est procédé uniquement à une adaptation de la modulation de la pression reprise, en fonction de propriétés physiques spécifiques du système de freinage, telles que par exemple les différences hydrauliques des freins des roues avant et des freins des roues arrière.

3. Procédé selon la revendication 2, **caractérisé en ce qu'**une adaptation s'effectue par le fait que les temps de montée en pression et les temps de réduction de la pression sur l'essieu arrière sont pondérés différemment.

4. Procédé selon l'une au moins des revendications précédentes, **caractérisé en ce que** parallèlement à la reprise de la modulation de la pression, d'autres fonctions de régulation ABS qui agissent sur l'essieu arrière, sont actives parallèlement, de manière que par exemple la pression soit réduite sur les deux roues arrière lorsqu'un comportement de roue instable est imminent sur au moins une roue arrière.

5. Système électronique de freinage de véhicule automobile, **caractérisé en ce qu'**un procédé selon les revendications précédentes est mis en oeuvre dans un micro-ordinateur d'un appareil électronique de commande des freins.
